# EUROPÄISCHE PATENTANMELDUNG

(11) **EP 0 686 604 A1**
(43) Veröffentlichungstag der Anmeldung: **13.12.1995**
(21) Anmeldenummer: 94108838.7
(22) Anmeldetag: 09.06.1994
(51) Int. Cl.: C02F 1/465

(54) **Vorrichtung zur Reinigung und Aufbereitung von Schmutzwässern**

(71) Anmelder: KLOSE ABWASSERTECHNIK GmbH, D-79350 Sexau (DE)
(72) Erfinder: Eschle, Winfried, D-79297 Winden (DE)
(74) Vertreter: Trappenberg, Hans

(57) **Zusammenfassung**

Eine Vorrichtung zur Behandlung von Schmutzwässern weist ein Becken (1) mit plattenförmigen Elektroden (2) auf. Die Elektroden sind mit ihren Flächen in einem Abstand gegenüberliegend angeordnet. Es sind Mittel (3,7,10) vorgesehen, welche sich im Becken befindliches Schmutzwasser zirkulierend durch den Raum zwischen den Elektroden treiben. Zur Beeinflussung der Strömung sind Klappen (7,10) angeordnet.

## Beschreibung

Die Erfindung betrifft eine Vorrichtung zur Reinigung und Aufbereitung von Schmutzwässern, mit einem Becken, in dem plattenförmige Elektroden mit ihren Flächen in einem Abstand gegenüberliegend angeordnet sind.

Derartige Vorrichtungen, in denen Schmutzwässer chargenweise gereinigt beziehungsweise aufbereitet werden, sind allgemein bekannt. Die Elektroden, welche beispielsweise aus Eisen und Aluminium bestehen können, sind mit einer Gleichspannung beaufschlagt. Da im Becken befindliches Schmutzwasser als Elektrolyt wirkt, fließt zwischen den plattenförmigen Elektroden ein Strom. Durch eine solche Behandlung des Schmutzwassers findet eine Flockung der im Wasser befindlichen Schmutzteilchen statt. Je nach Schmutzwasser genügt nun eine Behandlungszeit zwischen 5 und 30 Minuten, um eine genügend große Flockung zu erreichen. Durch eine nachfolgende Filterung des behandelten Schmutzwassers lassen sich die geflockten Schmutzteilchen vom Wasser trennen.

Obwohl mit der bekannten Vorrichtung gute Ergebnisse erzielt werden, so haftet ihr doch der Nachteil an, daß die Behandlungszeit des Schmutzwassers relativ hoch ist.

Es ist daher Aufgabe der Erfindung, eine eingangs genannte Vorrichtung derart auszubilden, daß die Behandlungszeit verkürzt und der Flockungsgrad erhöht wird.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung sind Mittel vorgesehen, welche sich im Becken befindliches Schmutzwasser zirkulierend durch den Raum zwischen den Elektroden treiben. Es hat sich überraschenderweise herausgestellt, daß, wenn man das Schmutzwasser mehrfach durch den Raum zwischen den Elektroden strömen läßt, eine viel intensivere und schnellere Flockung stattfindet. Durch den Umlauf des Schmutzwassers zwischen den Elektroden wird nach einem Bruchteil der bei der bekannten Vorrichtung benötigten Behandlungszeit derselbe Flockungsgrad erreicht wie bei der bekannten Vorrichtung. Durch die erfindungsgemäße Anordnung kann somit die Behandlungszeit wesentlich herabgesetzt werden. Der mit der erfindungsgemäßen Vorrichtung erreichbare Durchsatz von Schmutzwaser übertrifft sogar den Durchsatz, der mit Vorrichtungen zur kontinuierlichen Reinigung und Aufbereitung von Schmutzwässern erreicht wird, wie sie beispielsweise aus der DE 36 41 365 C2 bekannt sind.

Durch die Zirkulation des Schmutzwassers bildet sich an der Oberfläche des Schmutzwassers Schaum aus, welcher teilweise mit durch den Raum zwischen den Elektroden gezogen wird. Dies unterstützt die Flockung des Schmutzwassers durch den zusätzlichen Sauerstoffeintrag.

Als besonders vorteilhaft hat sich ein Becken herausgestellt, welches quaderförmig ausgebildet ist, und plattenförmige Elektroden hat, deren Breite etwa der Breite des Beckens entspricht und deren Höhe kleiner als die Höhe des Beckens ist, wobei die Elektroden in Gruppen angeordnet sind, welche sich flächig gegenüberstehen und jeweils in einem Abstand zu den ihnen flächig gegenüberstehenden Beckenwänden angeordnet sind. Durch eine solche Anordnung wird zum einen erreicht, daß das Schmutzwasser nicht seitlich an den Elektroden vorbeifließen kann, wo es keiner Behandlung unterzogen würde. Das Schmutzwasser kann nur durch den Raum zwischen den Elektroden oder dem Raum zwischen der jeweils äußeren Elektrode und der Beckenwand fließen. Hierdurch ergibt sich eine optimale Ausnützung des Beckeninhalts. Da die Höhe der Elektroden kleiner als die Höhe des Beckens ist, befinden sich die Elektroden vollständig im Schmutzwasser, so daß sich zum anderen das Schmutzwasser an der Oberfläche verteilen kann. Ebenso kann sich an der Oberfläche des Schmutzwassers ein fast gleichmäßig verteilter Schaumteppich ausbilden, von dem je nach Strömungsgeschwindigkeit Teile mit dem Schmutzwasser mitgerissen werden und in den Raum zwischen den Elektroden gelangen.

Eine weitere Ausführungsform der Erfindung sieht vor, daß der Boden des Behälters satteldachförmig ausgebildet ist, und die Mittel zum Treiben des Schmutzwassers nach Art einer Schiffsschraube ausgebildet sind, welche sich im satteldachförmigen Bereich des Beckens befindet, wobei der Antrieb für die Schraube zwischen den Elektroden-Gruppen angeordnet ist. Wenn die Schiffsschraube im Verhältnis zur Geometrie des Beckens groß gewählt wird, kann bei einer relativ langsamen Drehzahl eine genügend große Strömungsgeschwindigkeit erreicht werden. Zum Variieren der Strömungsgeschwindigkeit kann der Antrieb der Schiffsschraube steuerbar ausgebildet sein. Die Schiffsschraube ist so angeordnet, daß das Schmutzwasser von oben nach unten durch den Raum zwischen den Elektroden gezogen wird und an der Wandung des Beckens wieder von unten nach oben zur Oberfläche strömt. Durch den sich so ergebenden Kreislauf wird das Schmutzwasser wiederholt durch den Raum zwischen den Elektroden geleitet.

Durch den satteldachförmigen Boden läßt sich die Schiffsschraube besonders günstig im Behälter unterbringen. Darüber hinaus wird die Strömung des Schmutzwassers unterstützt. Besonders vorteilhaft ist eine verhältnismäßig große Schraube, welche sich mit langsamer Geschwindigkeit dreht.

Durch die erfindungsgemäße Anordnung wird zudem erreicht, daß die Strömungsgeschwindigkeit des Schmutwassers zwischen den einzelnen Elektroden unterschiedlich ist. Somit ist die Verweilzeit des Schmutzwassers in dem Raum zwischen zwei Elektroden unterschiedlich lange. Die Strömung des Schmutzwassers kann noch durch zweite Mittel beeinflußt werden, welche ober- und unterhalb der Elektroden angebracht sind. Durch die zweiten Mittel läßt sich zum einen die Menge beeinflussen, die durch den entsprechenden Raum zwischen den Elektroden durchfließt, und zum anderen entstehen hierdurch Verwirbelungen, wodurch verstärkt Schaum von der Oberfläche mit in den Raum zwischen den Elektroden gezogen wird und das Schmutzwasser im Raum zwischen den Elektroden ebenfalls nicht gleichförmig fließt, sondern verwirbelt ist. Hierdurch kommen sehr viel Schmutzwasserpartikel mit den Elektroden in Berührung.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:

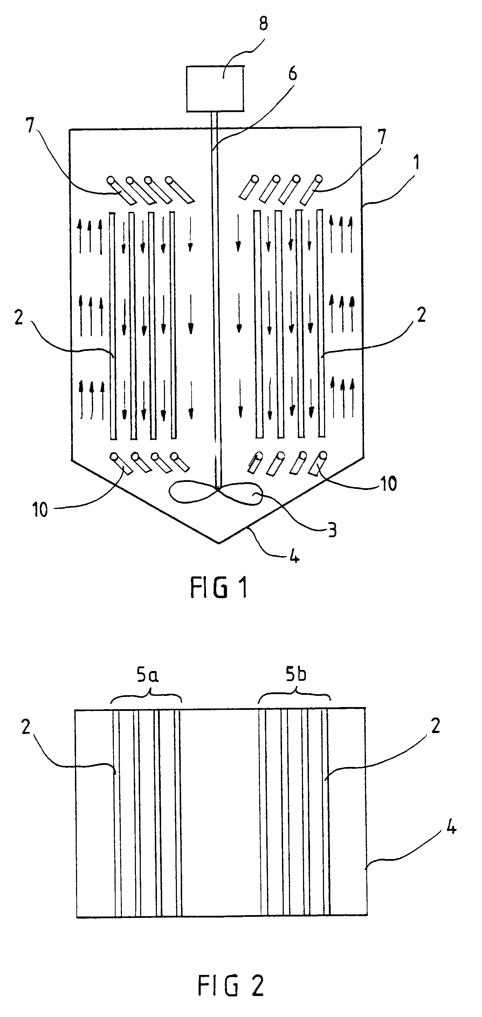

- Fig. 1: einen schematischen Querschnitt durch eine erfindungsgemäße Vorrichtung; und
- Fig. 2: die Elektrodenanordnung in einer erfindungsgemäßen Vorrichtung in der Draufsicht.

Wie der Zeichnung zu entnehmen ist, sind in einem quaderförmigen Becken 1 plattenförmige Elektroden 2 angeordnet. Die Elektroden 2 sind mit ihren Flächen in einem Abstand gegenüberliegend angeordnet. Insgesamt sind acht Elektroden 2 vorhanden, welche in zwei Gruppen 5a, 5b angeordnet sind. Die Breite der Elektroden 2 entspricht der Breite des Beckens 1, so daß sie von einer Längswand des Beckens zu der anderen reichen. Hierdurch kann seitlich von den Elektroden kein Wasser durchfließen. Der Behälter 1 hat einen satteldachförmigen Boden 4. Im satteldachförmigen Bodenbereich des Beckens 1 befindet sich eine Schiffsschraube 3. Die Schiffsschraube 3 ist über eine Welle 6 mit einem Motor 8 verbunden. Die Geschwindigkeit des Motors 8 ist regelbar. Der Durchmesser der Schiffsschraube 3 entspricht etwa einem Drittel der Breite des Beckens 1. Hierdurch erreicht das sich im Behälter 1 befindliche Schutzwasser selbst bei langsamer Drehung der Schraube 3 eine genügend große Strömungsgeschwindigkeit. Durch die Anordnung wird das Schmutzwasser im Bereich zwischen den jeweils äußeren Elektroden und den gegenüberstehenden Wänden des Behälters 1 an die Oberfläche des Beckens 1 getrieben, wo es sich verteilt und durch den Raum zwischen den Elektroden wieder nach unten gezogen wird. Die Geschwindigkeit, mit der das Schmutzwasser nach unten gezogen wird, ist zwischen den einzelnen Elektroden unterschiedlich.

Zur Beeinflussung der Strömung sind im oberen Bereich des Behälters 1 Klappen 7 angeordnet, welche verstellt werden können. Befindet sich eine Klappe in einem großen Winkel zur Oberfläche des Schmutzwassers, wird das Schmutzwasser stärker abgelenkt, als es bei einer Stellung der Klappe in einem kleinen Winkel zur Oberfläche geschieht. Hierdurch kann die Menge beziehungsweise die Strömungsgeschwindigkeit in den einzelnen Elektroden-Zwischenräumen eingestellt werden. Die Klappen 7 reichen ebenfalls über die gesamte Breite des Beckens 1. Sie können jedoch auch unterteilt sein, wodurch die Strömungsform nochmals verändert wird. Die Strömung kann auch durch eine bestimmte Eintauchtiefe der Plattenelektroden beeinflußt werden. Ist die Eintauchtiefe bei allen Platten gleich, findet nahezu keine Beeinflussung statt, sind einzelne Platten mit ihrer Oberkante dicht unter der Wasseroberfläche angeordnet, ist dadurch die Beeinflussung groß, da nur wenig Wasser über die Oberkante gelangen kann.

An der Oberfläche des Schmutzwassers bildet sich ein Schaumteppich 9 aus. Teile des Schaumes 9 werden mit dem Schmutzwasser in den Raum zwischen den Elektroden 2 gezogen. Dies unterstützt die Flockung des Schmutzwassers erheblich.

Zur weiteren Beeinflussung der Strömung des Schmutzwassers zwischen den Elektroden 2 sind weitere Klappen 8 vorgesehen, welche unterhalb der Elektroden 2 angeordnet sind.

Durch die erfindungsgemäße Anordnung wird zum einen erreicht, daß das Schmutzwasser wiederholt durch den Elektroden-Zwischenraum geführt wird, wobei die Strömungsgeschwindigkeiten unterschiedlich sind und im Elektroden-Zwischenraum Verwirbelungen auftreten, und zum anderen erreicht, daß Schaum mit dem Schmutzwasser in den Elektroden-Zwischenraum gelangt. Des weiteren wird durch erfindungsgemäße Anordnung eine Zwangsführung des Schmutzwassers erreicht.

## Patentansprüche

1. Vorrichtung zur Reinigung und Aufbereitung von Schmutzwässern. mit einem Becken (1), in dem plattenförmige Elektroden (2) mit ihren Flächen in einem Abstand gegenüberliegend angeordnet sind, dadurch gekennzeichnet, daß
Mittel (3, 6, 8) vorgesehen sind, welche sich im Becken (1) befindliches Schmutzwasser zirkulierend durch den Raum zwischen den Elektroden (2) treiben.

2. Vorrichtung nach Anspruch 1, dadurch gekennzeichnet, daß der Behälter (1) im wesentlichen quaderförmig ausgebildet ist und die Breite der plattenförmigen Elektroden etwa der Breite des Beckens (1) entspricht und die Höhe der Elektroden (2) kleiner als die Höhe des Beckens (1) ist, wobei die Elektroden in Gruppen (5a, 5b) angeordnet sind, welche Gruppen (5a, 5b) sich flächig gegenüberstehen und jeweils in einem Abstand zu den ihnen flächig gegenüberstehenden Beckenwänden angeordnet sind.

3. Vorrichtung nach Anspruch 1 oder 2, dadurch gekennzeichnet, daß der Boden (4) des Beckens (1) satteldachförmig ausgebildet ist, und die Mittel (3, 6, 8) zum Treiben des Schmutzwassers nach Art einer Schiffsschraube (3) ausgebildet sind, welche sich im satteldachförmigen Bereich des Beckens (1) befindet, wobei der Antrieb (6) für die Schraube (3) zwischen den Elektroden-Gruppen (5a, 5b) angeordnet ist.

4. Vorrichtung nach einem der Ansprüche 1 bis 3, dadurch gekennzeichnet, daß die Kittel (3, 6, 8) zum Treiben des Schmutzwassers hinsichtlich des Wasserdurchsatzes steuerbar sind.

5. Vorrichtung nach einem der Ansprüche 1 bis 4, dadurch gekennzeichnet, daß zweite Mittel (7, 10) vorgesehen sind, mittels welcher die Strömung des Schmutzwassers steuerbar ist.

6. Vorrichtung nach einem der Ansprüche 1 bis 5, dadurch gekennzeichnet, daß die Elektroden (2), die Mittel (3, 6, 8) zum Treiben des Schmutzwassers und die zweiten Mittel (7, 10) so angeordnet sind, daß die Strömung des Schmutzwassers zwischen verschiedenen Elektroden (2) unterschiedlich ist.
